# EUROPÄISCHE PATENTSCHRIFT

(11) **EP 1 190 190 B1**
(45) Veröffentlichungstag und Bekanntmachung des Hinweises auf die Patenterteilung: **14.07.2004**
(21) Anmeldenummer: 01936028.8
(22) Anmeldetag: 03.05.2001
(51) Int. Cl.: F16H 61/22, B60R 25/02

(54) **SCHALTVORRICHTUNG FÜR EIN KRAFTFAHRZEUGGETRIEBE**
SHIFTING DEVICE FOR AN AUTOMOBILE GEARBOX
DISPOSITIF DE CHANGEMENT DE VITESSES POUR UNE BOITE DE VEHICULE AUTOMOBILE

(30) Priorität: 04.05.2000 DE 10021461
(43) Veröffentlichungstag der Anmeldung: 27.03.2002
(73) Patentinhaber: ZF Lemförder Metallwaren AG, 49441 Lemförde (DE)
(72) Erfinder: MEYER, Jörg, 49419 Wagenfeld (DE)
(86) Internationale Anmeldenummer: PCT/DE2001/001663
(87) Internationale Veröffentlichungsnummer: WO 2001/084018

(56) Entgegenhaltungen:
- EP-A- 0 519 208
- EP-A- 0 852 307
- DE-A- 19 601 442
- US-A- 5 428 977

## Beschreibung

Die Erfindung betrifft eine Schaltvorrichtung nach dem Oberbegriff des Patentanspruches 1.

Derartige Schaltvorrichtungen werden aufgrund des mit ihnen erreichbaren Fahrkomforts immer häufiger für Automatikgetriebe oder automatisierte Kraftfahrzeuggetriebe eingesetzt. Fahrzeuge mit den genannten Kraftfahrzeuggetrieben unterliegen allerdings infolge ihrer zumeist gehobenen Ausstattung häufig der Gefahr, unbefugt benutzt zu werden Aus diesem Grund werden verstärkte Anstrengungen unternommen, die Kraftfahrzeuge zu sichern. Dies kann in sehr unterschiedlicher Weise geschehen.
Ein Lösungsansatz besteht darin, die Schaltvorrichtung gegen unbefugte Nutzung mittels Wählhebelsperren zu sichern Diese dienen somit einerseits der Fahrzeugsicherung gegen Diebstahl oder unbefugte Benutzung und können andererseits auch zur Vermeidung von gefahrenträchtigen Fehlbedienungen durch den Fahrzeugführer selbst zum Einsatz kommen.

Bekannt sind Wählhebelsperren für Schaltvorrichtungen beispielsweise als "Keylock" und/oder "Shiftlock", wobei "Keylock" bedeutet, dass der Wählhebel in der Parkstellung "P" des Wählhebels gegen eine Bewegung gesichert ist und der Zündschlüssel für die Inbetriebsetzung des Kraftfahrzeuges nur in dieser Parkstellung aus dem Zündschloß herausgezogen werden kann.
"Shiftlock" bedeutet dagegen, dass der Wählhebel aus der Parkstellung "P" und aus einer Neutralstellung "N" nur bei einer Bremsbetätigung und/oder unterhalb einer zulässigen Grenzgeschwindigkeit bewegt werden kann, um eine Anwahlfunktion weiterer Schaltstellungen zu erfüllen. Erreicht wird dies durch Sperrglieder, welche beispielsweise einzeln oder in einer Folge durch programmgesteuerte Elektromagneten betätigt werden. Die Schaltbewegung des Wählhebels ist bei derartigen Wählhebelsperren somit nur in Abhängigkeit von vorgegebenen Parametern möglich.

Aus der DE 196 01 442 C2 ist eine Schaltvorrichtung für ein Kraftfahrzeuggetriebe bekannt, in der beide Systeme "Shifilock" und "Keylock" zum Einsatz kommen. Die Schaltvorrichtung besteht aus einem Wählhebel zur Anwahl unterschiedlicher Schaltstellungen (P, R, N, D, 3, 2,...), der um eine Achse schwenkbar in einem Gehäuse gelagert ist Ein erstes Sperrglied und zwei weitere Sperrglieder blockieren die Bewegung des Wählhebels in unterschiedlichen Schaltstellungen in Abhängigkeit vorgegebener Parameter, also beispielsweise unterhalb einer höchstzulässigen Grenzgeschwindigkeit, um in diesem Fall eine versehentliche Anwahl der Rückwärtsfahrstufe aus einer Vorwärtsfahrstufe zu vermeiden. Zur Betatigung der Sperrglieder wird ein als Elektromagnet ausgeführtes Stellglied verwendet, wobei der Elektromagnet einen Anker aufweist, der beiderseitig aus dem Gehäuse des Elektromagneten heraus bewegbar ist und somit auf jeder Seite je ein Sperrglied bildet, das in Ausnehmungen des Wählhebels eingreifen kann. Als Sperrelement dient dabei der Wählhebel selbst, in den die Ausnehmungen eingebracht werden.
Das in der Schrift beschriebene redundante System einer Wählhebelsperre ist als eine Ausführung für einen speziellen Anwendungsfall recht aufwendig ausgeführt. Ein Nachteil dieser Lösung besteht ferner darin, dass drei Sperrglieder verwendet werden.

Des Weiteren offenbart die gattungsgemäße EP 0 519 208 A1 eine Schaltvorrichtung für ein Kraftfahrzeuggetriebe mit einem Wählhebel zur Anwahl unterschiedlicher Schaltstellungen (P, R, N, D, 3, 2, ...). Weiterhin ist ein schwenkbar am Gehäuse gelagertes Sperrglied vorhanden, welches zur Blockierung der Bewegung des Wählhebels in verschiedenen Schaltstellungen mit einem dem Wählhebel zugeordneten Sperrelement in Eingriff gebracht werden kann Das Sperrglied wird von einem Stellglied betätigt, welches über als Rollen ausgebildete Zwischenelemente mit an dem Sperrglied angeformten Kontaktflächen in einem Berührungskontakt steht Nachteilig an dieser für einen ebenfalls speziellen Anwendungsfall vorgesehenen Ausführung ist das aufwendig gestaltete Sperrglied sowie die lediglich durch eine Berührung gebildete Verbindung von Sperrglied und Stellglied, was im Fahrbetrieb zu unerwünschten Geräuschen führen kann.

Es ist technische Problemstellung der vorliegenden Erfindung, eine Schaltvorrichtung mit einer aus einfach herzustellenden Bauteilen gebildeten Sperrung des Wählhebels zu schaffen, wobei die einfach herstellbaren Bauteile variabel in vielfältigen Schaltvorrichtungen einsetzbar sein sollen.

Gelöst wird diese technische Problemstellung mit den kennzeichnenden Merkmalen des Patentanspruches 1.

Danach wird vorgeschlagen, die um je eine Schwenkachse schwenkbar am Gehäuse angebrachten Sperrglieder Winkelhebel auszuführen.
Die Winkelhebel sind einfach herstellbar, können baulich identisch ausgeführt werden und sind mit geringem Montageaufwand an dem Gehäuse zu befestigen, sodass mit einer erfindungsgemäßen Schaltvorrichtung insbesondere eine kostengünstige Ausführung bereitgestellt werden kann.

So ist es im Zuge der angestrebten Variantenvielfalt einer Schaltvorrichtung nach der vorliegenden Erfindung sinnvoll, die als Winkelhebel ausgeführten Sperrglieder jeweils mit zwei Armen auszustatten, die einen Öfinungswinkel (α) miteinander einschließen, der zwischen 0° und 180° betragen kann. Somit können die Sperrglieder ebenso als gerade, also weitgehend stabförmige Bauteile ausgeführt sein, wie auch als Winkelhebel im eigentlichen Sinne, wobei aufgrund der günstigen Hebelverhältnisse und der optimalen Einbausituation eine Ausführung zu bevorzugen ist, bei der der Öffnungswinkel (α) etwa 90° beträgt. Vorzugsweise im Verbindungsabschnitt der beiden Arme des Winkelhebels ist ein Schwenklager vorhanden, um dessen Schwenkachse der Winkelhebel am Gehäuse gelagert ist, wobei das Schwenklager auch unter Zwischenlage einer Dämpfungsschicht in das Gehäuse eingesetzt werden kann. Diese in ihrer Gesamtheit sehr einfache Lösung ermöglicht die Verwendung einheitlicher Bauteile für zahlreiche unterschiedliche Schaltungsvarianten, so dass ein Baukastensystem geschaffen werden konnte.

Das Stellglied weist vorzugsweise eine Kopplung mit den Sperrgliedern auf, die eine mittelbare oder unmittelbare Verbindung zu den Sperrgliedern herstellt. So kann beispielsweise auch eine Hebelmechanik vorgesehen werden, die somit eine mittelbare Anbindung des Stellgliedes an die Sperrglieder bilden würde. Das Stellglied betätigt bei der erfindungsgemäßen Schaltvorrichtung über die Kopplung gleichzeitig zwei (oder mehr) Sperrglieder, wobei sich höchstens ein Sperrglied mit dem am Wählhebel vorhandenen Sperrelement in Eingriff befindet.

An dieser Stelle muss betont werden, dass zumindest bei einer unmittelbaren Anbindung des Stellgliedes an die Sperrglieder die Abschnitte der Sperrglieder, die mit dem zugehörigen Stellglied verbunden sind, bei ihrer Schwenkbewegung einen Bogen beschreiben, während das Stellglied vorzugsweise geradlinige Bewegungen ausführt. Zum Ausgleich der damit vorhandenen Relativbewegung sind unterschiedliche Lösungen denkbar So kann die Verbindung in Form eines Kugelgelenkes ausgeführt werden oder das Stellglied beziehungsweise die Sperrglieder werden begrenzt beweglich gelagert.

Gemäß einer weiteren Ausgestaltung der Erfindung weisen die Sperrglieder auf ihrer dem Sperrelement zugewandten Seite eine erhabene Eingriffskontur auf. Diese Eingriffskontur ist in eine annähernd komplementäre Ausnehmung des Sperrelementes einrückbar.
Als Umsetzung dieses Merkmals der Erfindung könnte eine im Querschnitt rechteckige Eingriffskontur ebenso wie eine sagezahnartige oder jede andere möglich sein, die eine entsprechende Gegenkontur des Sperrelementes hintergreift beziehungsweise in diese eingreift.

Um die Ein- oder Ausführbewegungen der Sperrglieder zu erleichtern, wird weiterhin vorgeschlagen, an dem Sperrelement Gleitflächen vorzusehen, an denen die erhabenen Eingriffskonturen der Sperrglieder bis zu der Aufnahme in dem Sperrelement entlang gleiten können.
Eine spezielle Ausgestaltung der Erfindung besteht ferner darin, dass der Wählhebel einen bugelformigen Abschnitt aufweist, auf dessen Außenkontur wenigstens einseitig mindestens ein Sperrelement befestigt ist. Eine derartige Wählhebelausfuhrung gestattet eine weitere Erhöhung der Variantenvielfalt. So kann das Sperrelement wahlweise auf beiden Seiten des Wählhebels an dem bügelförmigen Abschnitt vorgesehen werden, sodass eine erfindungsgemässe Schaltvorrichtung sowohl für Rechts- als auch für Linkslenkerfahrzeuge einsetzbar ist, ohne dass die gesamte Schaltvorrichtung geändert werden muss. In Weiterführung dieser Grundidee sind entsprechende Vorkehrungen am Gehäuse zur Anbringung der Sperrglieder sowie zur Befestigung des Stellgliedes vorgesehen, sodass die einzelnen Komponenten beispielsweise mittels lösbarer Verbindungen auf der einen oder anderen Schaltvorrichtungsseite anbringbar sind, was die Umstellung des Montageprozesses erheblich erleichtert. In diesem Sinne sollten die Sperrglieder auch als identische Bauteile ausgeführt sein, deren Befestigung am Gehäuse lediglich in entgegengesetzter Richtung erfolgt. Die Schaltvorrichtung ist demnach insgesamt modular in der Art eines Baukastensystems aufgebaut.

Als Stellglied können Bauteile mit unterschiedlichen Wirkprinzipien verwendet werden, so beispielsweise mechanische, hydraulische, pneumatische oder elektrische. Eine sehr einfache Möglichkeit wird vorliegend darin gesehen, als Stellglied einen Elektromagneten mit einem in axialer Richtung beidseitig aus seinem Gehäuse herausführbaren, mittels einer Feder vorgespannten Anker einzusetzen.
Dieser Elektromagnet sollte vorteilhafter Weise im unbestromten Zustand einen einseitig ausgefahrenen Anker aufweisen, sodass sich beispielsweise in der Schaltstellung "P" der Schaltvorrichtung das Sperrglied und das Sperrelement miteinander in Eingriff befinden.

Ein Ausführungsbeispiel der Erfindung wird nachstehend unter Bezugnahme auf die Zeichnungen näher erläutert. Es zeigen.

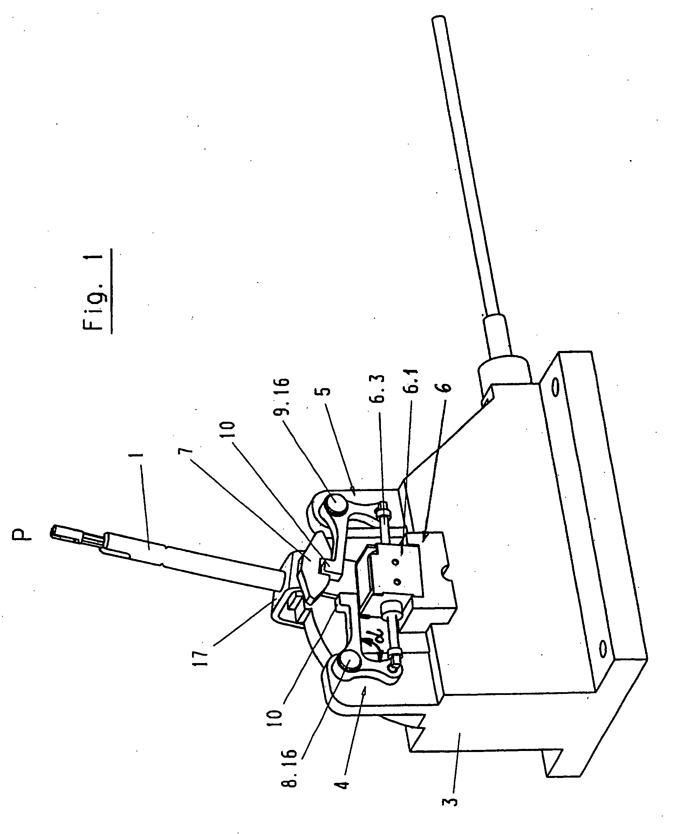

- Figur 1:: eine räumliche Ansicht einer vereinfacht dargestellten Ausführung einer erfindungsgemäßen Schaltvorrichtung,
- Figur 2:: eine Seitenansicht, bei der sich der Wählhebel in der Schaltstellung "P" befindet und
- Figur 3:: eine Seitenansicht, bei der sich der Wählhebel in der Schaltstellung "N" befindet.

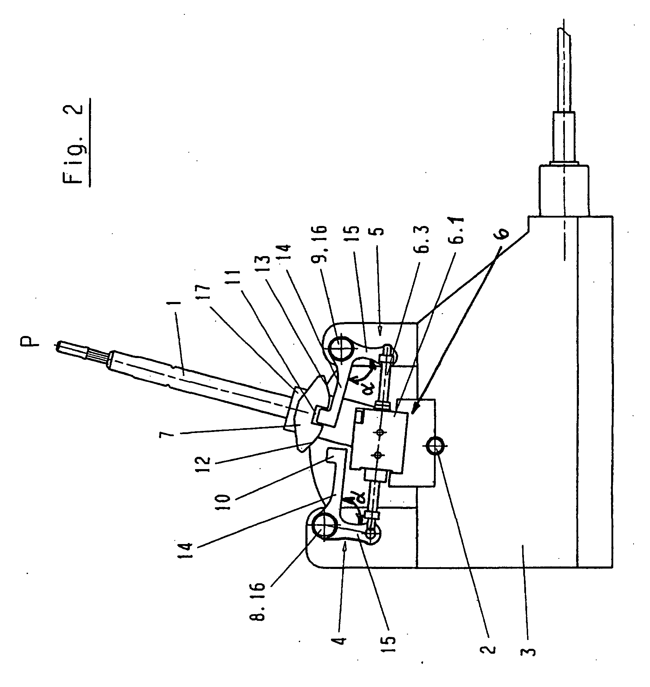

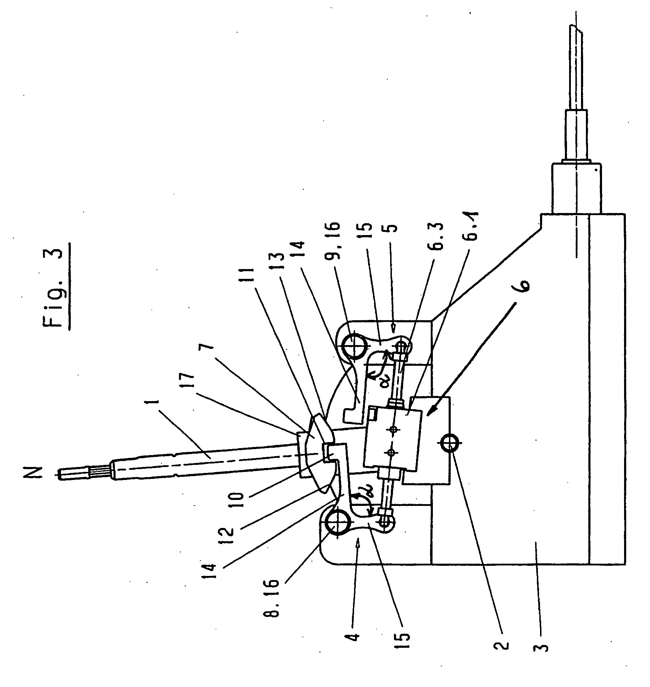

Die in den Figuren gezeigte vereinfachte Darstellung einer erfindungsgemäßen Schaltvorrichtung besteht aus einem Wählhebel 1, der um eine am besten in den Figuren 2 und 3 erkennbare Achse 2 schwenkbar in einem Gehäuse 3 gelagert ist. Diese Ausführung einer Schaltvorrichtung weist lediglich eine Schaltgasse auf und wurde als Automatikschaltvorrichtung konzipiert, bei der die Signale elektronisch erfasst und weitergeleitet werden Zur Umsetzung von Wählhebelsperren, die vorliegend in den Schaltstellungen "P" und "N" möglich sein sollten, sind zwei Sperrglieder 4 und 5 um je eine Schwenkachse 8 und 9 schwenkbar an einer Außenkontur des Gehäuses 3 befestigt. Die Schwenkachsen 8, 9 sind jeweils in einem gummiummantelten Schwenklager 16 gelagert. Der Wählhebel 1 weist einen bügelförmigen Abschnitt 17 auf, an dessen Außenoberfläche einseitig ein Sperrelement 7 befestigt ist. Dieses weist eine Ausnehmung 11 auf, in die je eine an den Sperrgliedern 4, 5 angeformte Eingriffskontur 10 einrücken kann. Das Sperrelement 7 ist ferner mit Gleitflächen 12, 13 ausgestattet, die die Ein- oder Ausrückbewegung der Sperrglieder 4, 5 erleichtern und diese gleichzeitig zumindest abschnittsweise führen sollen. Die identisch ausgeführten, jedoch entgegengesetzt zueinander am Gehäuse angebrachten Sperrglieder 4 und 5 verfügen jeweils über zwei Arme 14, 15, die einen annähernd 90° betragenden Öffnungswinkel (α) miteinander einschließen. An den unterhalb der Schwenkachse 8, 9 angeordneten Armen 15 der Sperrglieder 4, 5 sind diese mit einem Stellglied 6 verbunden, das vorliegend ein Elektromagnet ist. Dieser besteht aus einem Gehäuse 6.1, einem beiderseits aus dem Gehäuse austretenden und axial bewegbaren Anker 6.3, der innerhalb des Gehäuses 6.1 mittels einer in den Darstellungen nicht sichtbaren Feder 6.2 vorgespannt ist.

Eine derartige Schaltvorrichtung soll im unbestromten Zustand des Elektromagneten 6 einen einseitig ausgefahrenen und auf der gegenüberliegenden Seite des Gehäuses 6.1 einen entsprechend eingezogenen Anker 6.3 aufweisen, sodass die in Figur 2 gezeigte Stromlos-Sperre des Wählhebels realisiert werden kann. Wird durch den Fahrzeugführer das Fahrzeug gestartet und damit Strom zugeführt, so wird der Anker erst bewegt, wenn zusätzlich ein Signal für das betätigte Bremspedal anliegt. Die Signalsteuerung und -verarbeitung erfolgt in an sich bekannter Weise über eine zentrale Steuerungseinheit (CPU), auf die hier nicht näher eingegangen wird. Nachdem der Elektromagnet 6 über die Ankerbewegung den Winkelhebel 5 um die Schwenkachse 9 verschwenkt hat, ist der Wählhebel 1 freigegeben und es kann eine Fahrstufe angewählt werden.

Die in Fahrtrichtung gesehen hinter der Schaltstellung "N" gelegene Rückwärtsfahrstufe "R" kann dementsprechend nur angewählt werden, wenn der Elektromagnet 6 in der Schaltstellung "N" den Anker 6.3 derart ausfährt, dass die in der Figur 3 gezeigte Stellung von Sperrglied 4 und Sperrelement 7 außer Eingriff gebracht wird. Die Freigabe des Wählhebels ist an Bedingungen oder vorgegebene Parameter knüpfbar, wie beispielsweise eine unterschrittene Grenzgeschwindigkeit von 5 km/h. Somit können Fehlschaltungen und damit Schäden am Kraftfahrzeuggetriebe vermieden werden.

Letztlich betätigt bei einer erfindungsgemäßen Schaltvorrichtung ein Stellglied 6 über eine Kopplung gleichzeitig zwei (oder mehr) Sperrglieder 4, 5, wobei sich höchstens ein Sperrglied 4 oder 5 mit dem am Wählhebel 1 vorhandenen Sperrelement 7 in Eingriff befindet.

### Bezugszeichenliste:

- 1: Wählhebel
- 2: Achse
- 3: Gehäuse
- 4: Erstes Sperrglied
- 5: Weiteres Sperrglied
- 6: Stellglied
- 6.1: Gehäuse
- 6.2: Feder
- 6.3: Anker
- 7: Sperrelement
- 8: Schwenkachse
- 9: Schwenkachse
- 10: Eingriffskontur
- 11: Ausnehmung
- 12: Gleitfläche
- 13: Gleitfläche
- 14: Arm
- 15: Arm
- 16: Schwenklager
- 17: Bügelförmiger Wählhebelabschnitt

## Patentansprüche

1. Schaltvorrichtung für ein Kraftfahrzeuggetriebe, aufweisend:
- einen Wählhebel (1) zur Anwahl unterschiedlicher Schaltstellungen (P, R, N, D, 3, 2,...), der um mindestens eine Achse (2) schwenkbar in einem Gehäuse (3) gelagert ist,
- ein erstes Sperrglied (4) und mindestens ein weiteres Sperrglied (5), die die Bewegung des Wählhebels (1) in unterschiedlichen Schaltstellungen blockieren und die um je eine Schwenkachse (8, 9) schwenkbar an dem Gehäuse (3) gelagert sind,
- ein Stellglied (6), sowie
- ein an dem Wählhebel (1) vorhandenes Sperrelement (7), in das in Abhängigkeit vorgegebener Parameter in den zu sperrenden Schaltstellungen des Wählhebels jeweils eines der Sperrglieder (4, 5) eingreift,
**dadurch gekennzeichnet, dass**
die Sperrglieder (4, 5) als Winkelhebel ausgeführt sind, welche jeweils zwei Arme (14, 15) aufweisen, die einen Öffnungswinkel (α) miteinander einschtießen wobei 0° < α < 180° und in deren Verbindungsabschnitt ein Schwenklager (16) vorhanden ist und dass das Stellglied (6) mit den Sperrgliedern (4, 5) gekoppelt ist.

2. Schaltvorrichtung nach Anspruch 1,
**dadurch gekennzeichnet, dass**
die Sperrglieder (4, 5) auf ihrer dem Sperrelement (7) zugewandten Seite eine erhabene Eingriffskontur (10) aufweisen, die in eine annähernd komplementäre Ausnehmung (11) des Sperrelementes (7) einrückbar ist.

3. Schaltvorrichtung nach einem der vorstehend genannten Ansprüche,
**dadurch gekennzeichnet, dass**
das Sperrelement (7) Gleitflächen (12, 13) zur Erleichterung der Ein- bzw. Ausfuhrbewegungen der Sperrglieder (4, 5) aufweist.

4. Schaltvorrichtung nach einem der vorstehend genannten Ansprüche,
**dadurch gekennzeichnet, dass**
der Wählhebel (1) einen bügelförmigen Abschnitt (17) aufweist, auf dessen Außenkontur wenigstens einseitig mindestens ein Sperrelement (7) befestigt ist.

5. Schaltvorrichtung nach einem der vorstehend genannten Ansprüche,
**dadurch gekennzeichnet, dass**
die Sperrglieder (4, 5) identische Bauteile sind.

6. Schaltvorrichtung nach einem der vorstehend genannten Ansprüche,
**dadurch gekennzeichnet, dass**
das Stellglied (6) ein Elektromagnet mit einem in axialer Richtung beidseitig aus seinem Gehäuse (6.1) herausführbaren, mittels einer Feder (6.2) vorgespannten Anker (6.3) ist.

7. Schaltvorrichtung nach Anspruch 6,
**dadurch gekennzeichnet, dass**
der Elektromagnet (6) im unbestromten Zustand einen einseitig ausgefahrenen Anker (6.3) aufweist, sodass sich in der Schaltstellung "P" der Schaltvorrichtung das Sperrglied (5) und das Sperrelement (7) miteinander in Eingriffbefinden.

8. Schaltvorrichtung nach einem der vorstehend genannten Ansprüche,
**dadurch gekennzeichnet, dass**
die Schaltvorrichtung insgesamt modular in der Art eines Baukastensystems aufgebaut ist.

## Claims

1. Gear shift apparatus for a motor vehicle transmission, comprising:
- a selector lever (1) for selecting different shift positions (P, R, N, D, 3, 2, ...), which is mounted in a housing (3) pivotally about at least one axle (2),
- a first blocking member (4) and at least one further blocking member (5), which block the movement of the selector lever (1) in different shift positions and which are mounted on the housing (3) in each case pivotally about a swivelling axle (8, 9),
- an actuator (6), as well as
- a blocking element (7), which is provided on the selector lever (1) and into which in dependence upon preset parameters in the shift positions of the selector lever that are to be blocked in each case one of the blocking members (4, 5) engages,
**characterized in that**
the blocking members (4, 5) are designed as angle levers, which each have two arms (14, 15), which between them include an opening angle α, wherein 0° < α < 180°, and in the connecting portion of which a pivot bearing (16) is provided, and that the actuator (6) is coupled to the blocking members (4, 5).

2. Gear shift apparatus according to claim 1,
**characterized in that**
the blocking members (4, 5) on their side facing the blocking element (7) have a raised engagement contour (10), which is engageable into an approximately complementary recess (11) of the blocking element (7).

3. Gear shift apparatus according to one of the preceding claims,
**characterized in that**
the blocking element (7) has sliding faces (12, 13) for facilitating the insertion and/or removal movements of the blocking members (4, 5).

4. Gear shift apparatus according to one of the preceding claims,
**characterized in that**
the selector lever (1) has a bow-shaped portion (17), on the external contour of which at least at one end at least one blocking element (7) is fastened.

5. Gear shift apparatus according to one of the preceding claims,
**characterized in that**
the blocking members (4, 5) are identical components.

6. Gear shift apparatus according to one of the preceding claims,
**characterized in that**
the actuator (6) is an electromagnet having an armature (6.3), which is extendable in axial direction from both ends of its housing (6.1) and biased by means of a spring (6.2).

7. Gear shift apparatus according to claim 6,
**characterized in that**
the electromagnet (6) in the non-energized state has a unilaterally extended armature (6.3), so that in the shift position "P" of the gear shift apparatus the blocking member (5) and the blocking element (7) are in mutual engagement.

8. Gear shift apparatus according to one of the preceding claims,
**characterized in that**
the gear shift apparatus is of an entirely modular construction in the manner of a unitized construction system.

## Revendications

1. Dispositif de commutation pour une transmission de véhicule automobile, comprenant:
- un levier de sélection (1) pour sélectionner différentes positions de commutation (P, R, N, D, 3, 2, ...) et qui est monté dans un boîtier (3) de manière à pouvoir pivoter autour d'au moins un axe (2),
- un premier organe de blocage (4) et au moins un second organe de blocage (5), qui bloquent le déplacement du levier de sélection (1) dans différentes positions de commutation et qui sont montés dans le boîtier (3) de manière à pouvoir pivoter autour de respectivement un axe de pivotement (8, 9),
- un organe de réglage (6),
- un élément de blocage (7) qui est présent sur le levier de sélection (1) et dans lequel s'engage respectivement l'un des organes de blocage (4, 5) en fonction de paramètres prédéterminés lorsque le levier de sélection est dans les positions de commutation devant être bloquées,
**caractérisé en ce que**
les organes de blocage (4, 5) sont agencés sous la forme de leviers coudés, qui comportent chacun deux bras (14, 15), qui font entre eux un angle d'ouverture α où 0° < α < 180°, qu'un palier pivotant (16) est présent dans la section de liaison de ces bras et que l'organe de réglage (6) est couplé aux organes de blocage (4, 5).

2. Dispositif de commutation selon la revendication 1, **caractérisé en ce que**
les organes de blocage (4, 5) comportent, sur leur côté tourné vers l'élément de blocage (7), un contour d'engagement surélevé (10), qui peut être repoussé dans un évidement approximativement complémentaire (11) de l'élément de blocage (7).

3. Dispositif de commutation selon l'une des revendications précédentes, **caractérisé en ce que**
l'élément de blocage (7) comporte des surfaces de glissement (12, 13) pour faciliter les déplacements d'entrée et de sortie des organes de blocage (4, 5).

4. Dispositif de changement de vitesse selon l'une des revendications précédentes, **caractérisé en ce que**
le levier de sélection (1) comporte une section en forme d'étrier (17), sur le contour extérieur duquel un élément de blocage (7) est fixé au moins d'un côté.

5. Dispositif de commutation selon l'une des revendications précédentes, **caractérisé en ce que**
les organes de blocage (4, 5) sont des composants identiques.

6. Dispositif de commutation selon l'une des revendications indiquées précédemment, **caractérisé en ce que**
l'organe de réglage (6) est un électroaimant comportant une armature (6.3) qui peut être ressortie dans la direction axiale des deux côtés hors de son boîtier (6.1) et est précontrainte à l'aide d'un ressort (6.2).

7. Dispositif de commutation selon la revendication 6, **caractérisé en ce que**
dans l'état non alimenté en courant, l'électroaimant (6) comporte une armature (6.3) ressortie d'un côté, de sorte que lorsque le dispositif de changement de vitesse est dans la position de commutation "P", l'organe de blocage (5) et l'élément de blocage (7) sont réciproquement en prise.

8. Dispositif de commutation selon l'une des revendications précédentes, **caractérisé en ce que**
le dispositif de changement de vitesse est agencé globalement sous forme modulaire à la manière d'un système modulaire.
